# EUROPEAN PATENT APPLICATION

(11) **EP 4 435 493 A1**
(43) Date of publication of application: **25.09.2024**
(21) Application number: 24156776.7
(22) Date of filing: 09.02.2024
(51) Int. Cl.: G02B 27/01, G02B 7/02

(54) **ACTUATOR FOR MULTIPLE PAYLOADS**

(30) Priority: 06.03.2023 US 202363450296 P; 16.01.2024 US 202418414196
(71) Applicant: Meta Platforms Technologies, LLC, Menlo Park, CA 94025 (US)
(72) Inventor: Diest, Kenneth Alexander, Menlo Park (US); Nelson, John, Menlo Park (US); Luanava, Selso, Menlo Park (US)
(74) Representative: Murgitroyd & Company

(57) **Abstract**

A device includes multiple payloads that are adjusted by actuators. The payloads may be optical elements such as lens assemblies. The actuators may be disposed within edge gaps of the payloads in order to reduce the footprint of the structure. One actuator may be configured to adjust more than one payload to reduce the number of actuators.

## Description

### CROSS-REFERENCE TO RELATED APPLICATIONS

This application claims priority to U.S. provisional Application No. 63/450,296 filed March 6, 2023.

### TECHNICAL FIELD

This disclosure relates generally to actuators and the usage of actuators in the optical field.

### BACKGROUND INFORMATION

Actuators are a component that enables movement. Actuators may be linear actuators to generate movement along a vector or rotary actuators to generate rotational motion, for example. Actuators may be electrical, gas, or hydraulic. Smaller actuators are often microelectromechanical systems (MEMS) that convert electrical power into mechanical output(s). Range requirements and precision requirements are common specifications for actuators.

### SUMMARY

According to an aspect of the present invention there is provided a display comprising: a source layer including a red light source configured to emit red light, a green light source configured to emit green light, and a blue light source configured to emit blue light; a first lens assembly configured to focus the red light of an image; a second lens assembly configured to focus the green light of the image; a third lens assembly configured to focus the blue light of the image; a first actuator; a second actuator; and a third actuator, wherein the first actuator, the second actuator, and the third actuator are disposed between the first, second, and third lens assemblies.

Optionally, the first actuator, the second actuator, and the third actuator adjust at least two of the first lens assembly, the second lens assembly, or the third lens assembly.

Optionally, a first Shape-Memory Alloy (SMA) wire included in the first actuator rotates the first lens assembly clockwise and rotates the second lens assembly counterclockwise.

Optionally, an actuation direction of the first actuator, the second actuator, and the third actuator is parallel to an actuator movement of the first actuator, the second actuator, and the third actuator.

Optionally, an actuation direction of the first actuator, the second actuator, and the third actuator is non-parallel to an actuator movement of the first actuator, the second actuator, and the third actuator.

Optionally, the first actuator, the second actuator, and the third actuator include helical, linear, levered, or scissor linkage actuators.

Optionally, the display further comprises: a global actuator configured to adjust a focus distance of the first lens assembly, the second lens assembly, and the third lens assembly, wherein the first actuator, the second actuator, and the third actuator are coupled to adjust from the global actuator.

Optionally, the display further comprises: a first lock mechanism configured to retain a first position of the first lens assembly; a second lock mechanism configured to retain a second position of the second lens assembly; and a third lock mechanism configured to retain a third position of the third lens assembly.

Optionally, activating the first lock mechanism prevents adjustment of the first lens assembly while the second lens assembly is being adjusted by the first actuator, and wherein activating the second lock mechanism prevents adjustment of the second lens assembly while the third lens assembly is being adjusted by the second actuator.

Optionally, the display further comprises: focusing logic configured to drive the first actuator, the second actuator, and the third actuator to focus the image over a temperature range.

Optionally, the focusing logic is configured to drive the first actuator, the second actuator, and the third actuator in response to a resistance of Shape-Memory Alloy (SMA) wires included in the first actuator, the second actuator, and the third actuator.

Optionally, the focusing logic is configured to drive the first actuator, the second actuator, and the third actuator in response to optical feedback of the display.

Optionally, each actuator adjusts two or more lens assemblies.

Optionally, the first actuator, the second actuator, and the third actuator are disposed within center gaps and edge gaps defined by the first lens assembly, the second lens assembly, and the third lens assembly.

According to a further aspect of the present invention there is provided a device comprising: a first payload including a first optical element; a second payload including a second optical element; a first actuator; and a second actuator, wherein the first actuator and the second actuator are configured to adjust the first payload or the second payload, and wherein at least one of the first actuator and or the second actuator is disposed within edge gaps of the first payload and the second payload.

Optionally, at least one of the first actuator and the second actuator is outside an outermost point of the first payload and the second payload.

Optionally, the first optical element includes a first light source and the second optical element includes a second light source.

Optionally, the first optical element includes a first image sensor and the second optical element includes a second image sensor.

Optionally, the first optical element includes a first lens and the second optical element includes a second lens, and wherein a first Shape-Memory Alloy (SMA) wire included in the first actuator adjusts the first payload and the second payload.

According to a further aspect of the present invention there is provided a head-mounted display (HMD) comprising: a frame; and a micro-display for presenting a virtual image to an eyebox region, the micro-display comprising: at first light source configured to emit first light of the virtual image; a second light source configured to emit second light of the virtual image; a first lens assembly configured to focus the first light of the virtual image; a second lens assembly configured to focus the second light of the virtual image; and an actuator configured to adjust both the first lens assembly and the second lens assembly.

### BRIEF DESCRIPTION OF THE DRAWINGS

Non-limiting and non-exhaustive embodiments of the invention are described with reference to the following figures, wherein like reference numerals refer to like parts throughout the various views unless otherwise specified.
FIG. 1 shows a top down view of a structure including three micro-actuators moving three payloads, in accordance with aspects of the disclosure.
FIG. 2 illustrates a perspective view of an example payload structure, in accordance with aspects of the disclosure.
FIG. 3 illustrates a payload structure including a global micro-actuator, in accordance with aspects of the disclosure.
FIG. 4 illustrates a structure having micro-actuators for adjusting lens assemblies to focus image light, in accordance with aspects of the disclosure.
FIG. 5 illustrates a payload structure having micro-actuators located outside of edge gaps, in accordance with aspects of the disclosure.
FIG. 6 illustrates a structure having a global micro-actuator coupled to a platform that is other than a source layer, in accordance with aspects of the disclosure.
FIG. 7 illustrates an example augmented reality (AR) headset that may include a micro-display that includes micro-actuators configured to move lens assemblies, in accordance with aspects of the disclosure.

### DETAILED DESCRIPTION

Embodiments of actuators for multiple payloads are described herein. In the following description, numerous specific details are set forth to provide a thorough understanding of the embodiments. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In some implementations of the disclosure, the term "near-eye" may be defined as including an element that is configured to be placed within 50 mm of an eye of a user while a near-eye device is being utilized. Therefore, a "near-eye optical element" or a "near-eye system" would include one or more elements configured to be placed within 50 mm of the eye of the user.

In aspects of this disclosure, visible light may be defined as having a wavelength range of approximately 380 nm - 700 nm. Non-visible light may be defined as light having wavelengths that are outside the visible light range, such as ultraviolet light and infrared light. Infrared light having a wavelength range of approximately 700 nm - 1 mm includes near-infrared light. In aspects of this disclosure, near-infrared light may be defined as having a wavelength range of approximately 700 nm - 1.6 µm.

In aspects of this disclosure, the term "transparent" may be defined as having greater than 90% transmission of light. In some aspects, the term "transparent" may be defined as a material having greater than 90% transmission of visible light.

Displays and micro-displays often include three light sources (e.g. red, green, and blue) to form an image. Each light source may include focusing optics to focus the light. As micro-displays heat up, the position of each lens barrel (that includes focusing optics) will drift, and the position of the different lens barrels drift by different amounts. Prior approaches to addressing the drift include adding a micro-actuator around each lens barrel so that each lens barrel can be adjusted. However, this approach adds considerable bulk to a micro-display.

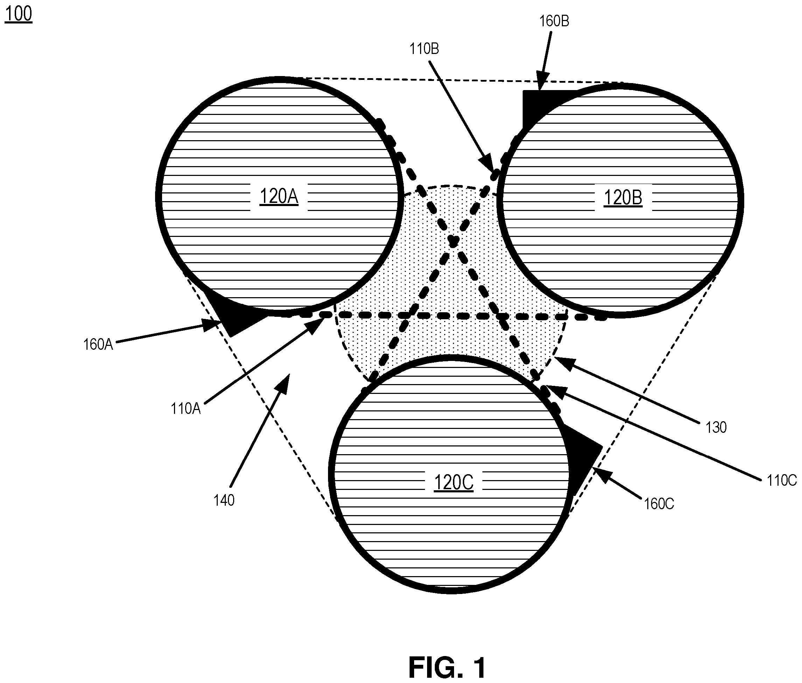

In aspects of this disclosure, multiple micro-actuators for multiple payloads that are space-saving are disclosed. In some implementations, the resulting total size is less than the sum of multiple individual micro-actuators. In some implementations, three payloads of a micro-lens barrel assembly (a cylinder with multiple aligned lenses) are configured to be moved by micro-actuators. The micro-actuators may include piezo actuation or a Shape-Memory Alloy (SMA) wire, for example. In some implementations, a micro-display that includes the lens assemblies and micro-actuators are included in a head mounted display such as an augment reality (AR) or virtual reality (VR) headset. These and other embodiments are described in more detail in connections with FIGs. 1-7.

In this disclosure, the term "payload" may be defined as object being moved by one or more micro-actuators. This includes, but is not limited to, optical components, such as: lenses, lens barrels or assemblies, sub-sections of a lens barrels or assemblies, mirrors, prisms, or waveplates.

In this disclosure, the term "micro-actuator" may be defined as a device that exerts a force under the application of external stimuli or energy, where the dimensions of such a device are less than 200 mm, and are more commonly less than 100 mm. Such devices may be driven by one or more mechanisms, including, but not limited to: phase change, piezoelectric, capacitive, magnetic, pneumatic, or hydraulic. The micro-actuators of the disclosure may be helical, linear, levered, or scissor linkage actuators. The micro-actuators may be considered MEMS devices.

In this disclosure, the term "actuator material" may be defined as material that changes size under an applied stimulus or energy. Such materials may include: piezoelectrics, shape memory alloys, electroactive polymers such as polyvinylidene fluoride (PVDF) and sulfonated tetrafluoroethylene based fluoropolymer-copolymer.

FIG. 1 shows a top down view of structure 100 including three micro-actuators moving three payloads, in accordance with aspects of the disclosure. The three micro-actuators 110A, 110B, and 110C may be collectively referred to as micro-actuators 110 and payloads 120A, 120B, and 120C may be collectively referred to as payloads 120. Micro-actuators 110 are disposed within center gap 130 and edge gaps 140 formed by the combination of the three payloads 120. Center gap 130 and edge gaps 140 do not represent physical structures but rather open space between payloads 120. Edge gap 140 may be defined by drawing imaginary lines from the outermost point of each payload 120. Disposing the micro-actuators 110 inside the outermost point of payloads 120 limits the footprint of structure 100 to be within the footprint of the payloads themselves rather than micro-actuators adding to the footprint of the structure. This allows structure 100 to be included in space-constrained devices or contexts.

Micro-actuators 110 may include SMA wires, piezoelectrics, or other types of devices. In FIG. 1, the micro-actuators 110 are in the plane of the space between micro-actuators. The micro-actuators 110 may move payloads 120 rotationally, laterally, or in and out of the plane of the page (through the use of a helical design which translates in-plane motion to out-of-plane motion).

In the case of using SMA micro-actuators in isolation, two wires are conventionally needed for actuation along each axis of movement. Each wire actuates by heating up and then contracting. Hence, to move in the + and - direction, a wire is conventionally required on either side of the payload. When payloads are moved in isolation from a larger system, this results in the number of SMA wires scaling as 2*n where n is the number of payloads.

However, the implementation of structure 100 illustrated in FIG. 1 shows one example of connecting a single micro-actuator wire to two payloads - thus actuating two payloads 120 from a single SMA wire. Based on this configuration, actuation of an SMA wire 110B would rotate payload 120B counterclockwise and rotate payload 120C clockwise, since actuation of an SMA wire 110B results in a contraction of the SMA wire. Similarly, actuation (contraction) of the SMA wire 110A would rotate the payload 120B in the clockwise direction and rotate payload 120A counterclockwise. Actuation (contraction) of SMA wire 110C rotates payload 120A clockwise and rotates payload 120C counterclockwise. Thus, each payload 120 can be rotated clockwise and counterclockwise with just three micro-actuators 110 that are configured as SMA wires. Of course, depending on the micro-actuator implementation, this rotation could also result in a linear translation in and out of the plane of the page.

In the above actuation examples, two payloads 120 would rotate in the opposite rotational orientation when the SMA wire 110 that connects the two payloads would contract. This can be utilized as part of a needed actuation for each payload. Alternatively, if one or more of the payloads 120 should remain static during actuation of one of the SMA wires, an optional locking mechanism can be added to some or all of the micro-actuators. FIG. 1 illustrates optional locking mechanism 160A added to micro-actuator 110A, optional locking mechanism 160B added to micro-actuator 110B, and optional locking mechanism 160C added to micro-actuator 110C. Locking mechanisms 160A, 160B, and 160C may be referred to collectively as locking mechanisms 160.

Activation of an individual locking mechanism, along with the two relevant SMA wires 110 enable individually addressable control of each of the elements within the multi-payload structure 100, while reducing the number of SMA wires needed by a factor of two. This reduction in SMA wires 110 may also result in reduced total power consumption of the multi-micro-actuator system. The reduction in SMA wires 110 may also reduce the number of control signals needed and the electrical routing required to drive the micro-actuators in the structure.

In an implementation where payloads 120 are lens assemblies, activating the first locking mechanism 160A prevents adjustment of the first lens assembly 120A while the second lens assembly 120B is being adjusted by the first micro-actuator 110A, activating second locking mechanism 160B prevents adjustment of second lens assembly 120B while the third lens assembly 120C is being adjusted by the second micro-actuator 110B, and activating the third locking mechanism 160C prevents adjustment of the third lens assembly 120C while the first lens assembly 120A is being adjusted by the third micro-actuator 110C.

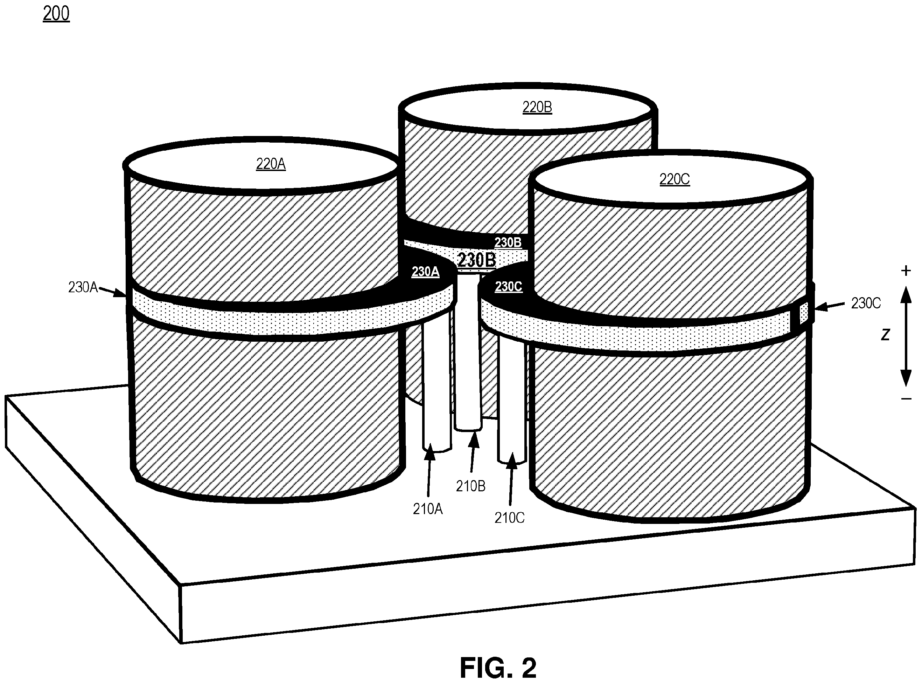

FIG. 2 illustrates a perspective view of a payload structure 200, in accordance with aspects of the disclosure. Here, the micro-actuators 210A, 210B, and 2100 (collectively referred to as micro-actuators 210) are located within the edge gap between payloads 220A, 220B, and 220C to reduce the overall footprint of payload structure 200. Payloads 220A, 220B, and 220C may collectively be referred to as payloads 220. Payload structure 200 differs from payload structure 100 in that micro-actuators 210 in structure 200 are oriented vertically along with payloads 220. In this configuration, the payloads 220s would be moved in the + or - z direction. While FIG. 2 shows the micro-actuators 210 oriented vertically, the micro-actuators may also be oriented at other angles with respect to the axis of actuation in other implementations. Micro-actuators 210 are coupled to the payloads 220 via some mechanical mechanism 230. In the illustrated implementation, the mechanical mechanism that couples micro-actuators 210 to payloads 220 are collars that wrap around payloads 220. Collar 230A couples micro-actuator 210A to payload 220A, collar 230B couples micro-actuator 210B to payload 220B, and collar 230C couples micro-actuator 210C to payload 220C. The top surface of each collar is shaded black, in FIG. 2.

In implementations of structure 200 that include SMA wires as micro-actuators 210 where the method of actuation is contraction, a second set of SMA wires could be located on the top surface of the coupling mechanism 230 and then mounted to a mechanical support above the plane of the top surface of coupling mechanisms 230. Contraction of this second set of SMA wires would be able to actuate each payload 220 in the vertical direction above 230. Payloads 220A, 220B, and 220C may be lens assemblies for focusing light, in some implementations.

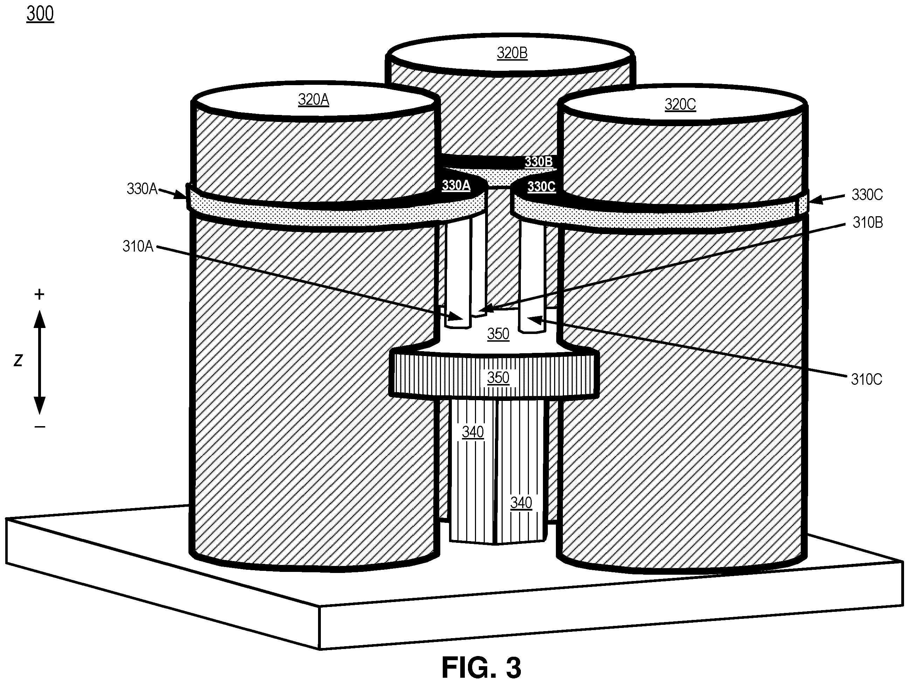

FIG. 3 illustrates a payload structure 300 including a global micro-actuator 340, in accordance with aspects of the disclosure. Micro-actuators 310A, 310B, and 310C (collectively referred to as micro-actuators 310) are located within the edge gap between payloads 320A, 320B, and 320C to reduce the overall footprint of payload structure 300. Payloads 320A, 320B, and 320C may collectively be referred to as payloads 320. Collar 330A couples micro-actuator 310A to payload 320A, collar 330B couples micro-actuator 310B to payload 320B, and collar 330C couples micro-actuator 310C to payload 320C. The top surface of each collar is shaded black, in FIG. 3.

In FIG. 2, each payload 220 is actuated independently - by its own micro-actuator 210. For payload structure 300, a global movement for multiple micro-actuators is accomplished by a separate global micro-actuator 340 which moves a separate mechanical coupler 350 that globally moves multiple payloads 320 by a given offset. From that offset point, additional, local micro-actuators 310A, 310B, and 310C may be actuated to adjust the position of payloads 320A, 320B, and 320C, respectively. As in FIG. 2, payload structure 300 is illustrated with all micro-actuators (310A, 310B, 310C, and 340) having vertical alignment and alignment with the actuation axes. Payloads 320A, 320B, and 320C may be lens assemblies for focusing light, in some implementations.

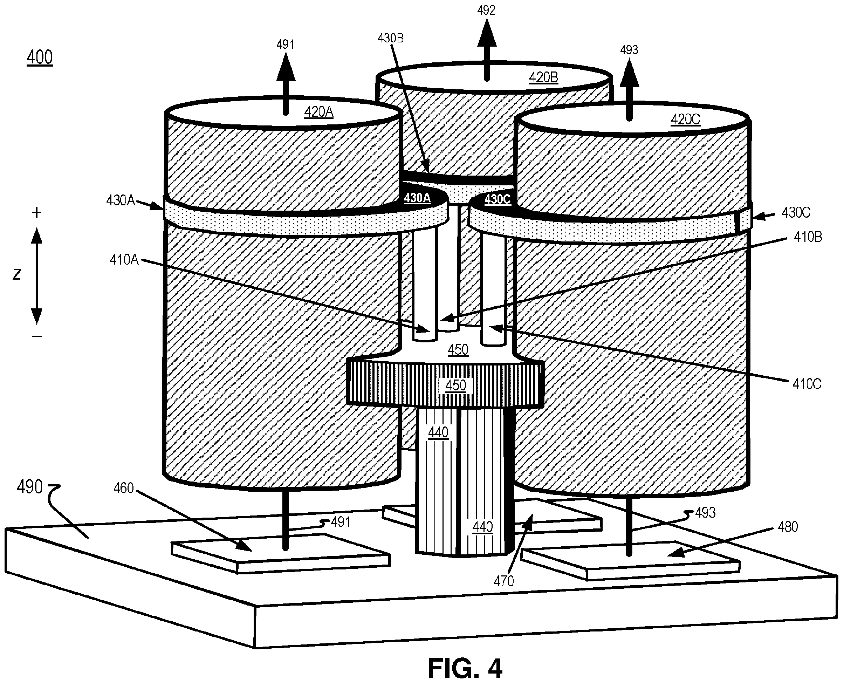

FIG. 4 illustrates a device 400 having micro-actuators for adjusting lens assemblies to focus image light, in accordance with aspects of the disclosure. In FIG. 4, the payloads are lens assemblies 420A, 420B, and 420C and micro-actuators 410A, 410B, and 410C adjust lens assemblies 420A, 420B, and 420C, respectively. Global micro-actuator 440 adjusts a global offset of lens assemblies 420A, 420B, and 420C by moving a separate mechanical coupler 450 that is attached to micro-actuators 410. The global micro-actuator 440 is configured to adjust a focus distance of the first lens assembly 420A, the second lens assembly 420B, and the third lens assembly 420C. Actuators 410A, 410B, and 410C are coupled to adjust from the offset of global micro-actuator 440. In the illustrated implementation, lens assembly 420A focuses first light 491 emitted by first micro-display 460, lens assembly 420B focuses second light 492 emitted by second micro-display 470, and lens assembly 420C focuses third light 493 emitted by third micro-display 480.

In an implementation, first light 491, second light 492, and third light 493 are different wavelengths. In an implementation, first light 491, second light 492, and third light 493 are red light, green light, and blue light, respectively. The red light, green light, and blue light may combine to form a color image, for example. In an implementation, first light 491, second light 492, and third light 493 have a beamwidth of less than 5 nm. In an implementation, first light 491, second light 492, and third light 493 are laser light. The micro-displays 460, 470, and 480 may include light sources disposed on, or coupled to, source layer 490. The light sources may be lasers, LEDs, or superluminescent light emitting diodes (SLEDs).

In the implementation of FIG. 4, local actuation of each lens assembly 420 would correspond with the athermalization requirements of each lens assembly while the global actuation 440 could support both global athermalization needs, as well as initial alignment capabilities during assembly. Notably, payload structures 100, 200, and 300 may also be used to focus image light to form an image, as described in association with device 400.

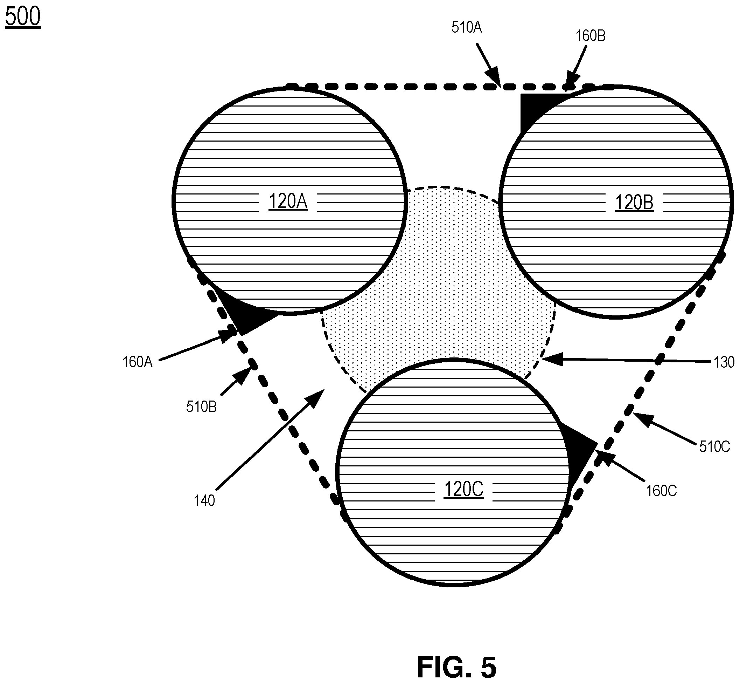

FIG. 5 illustrates a payload structure 500 having micro-actuators located outside of edge gaps 140, in accordance with aspects of the disclosure. Payload structure 500 has similar functionality to structure 100 of FIG. 1, although the micro-actuators 510A, 510B, and 510C are disposed (slightly) outside of the outermost point of payloads 120A, 120B, and 120C.

In FIG. 5, actuation of an SMA wire 510A would rotate payload 120A clockwise and rotate payload 120B counterclockwise, since actuation of an SMA wire 510A results in a contraction of the SMA wire. Similarly, actuation (contraction) of the SMA wire 110B would rotate the payload 120A in the counterclockwise direction and rotate payload 120C clockwise. Actuation (contraction) of SMA wire 510C rotates payload 120C counterclockwise and rotates payload 120B clockwise. Thus, each payload 120 can be rotated clockwise and counterclockwise with just three micro-actuators 510 that are configured as SMA wires. Of course, depending on the micro-actuator implementation, this rotation could also result in a linear translation in and out of the plane of the page.

In FIG. 5, the illustrated SMA wires 510 are located outside of the outermost point of payloads 120 and in FIG. 1 the illustrated SMA wires 110 are disposed between payloads 120. In some implementations, a portion of the SMA wires may be located between payloads and the remaining portion of SMA wires may be located outside of the outermost point of payloads 120.

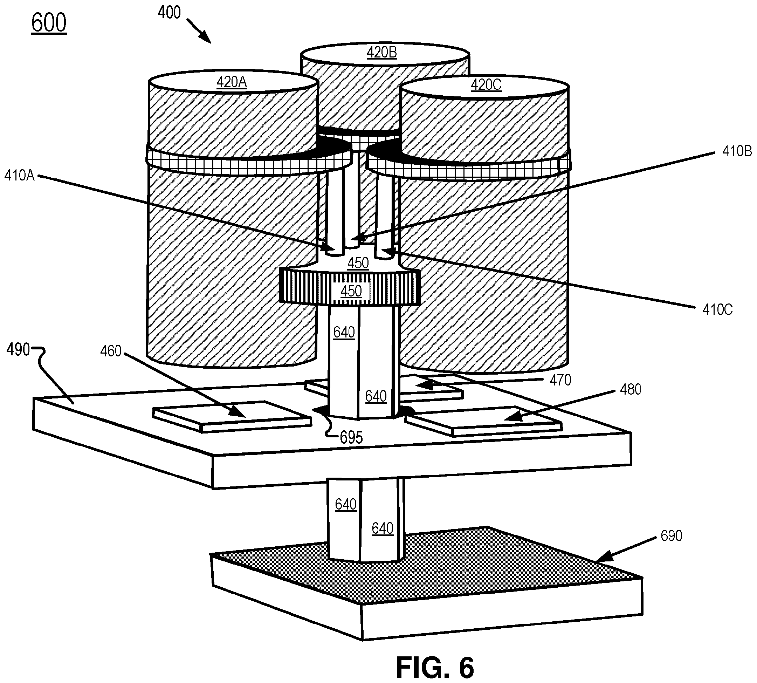

FIG. 6 illustrates a device 600 having a global micro-actuator 640 coupled to a platform that is other than source layer 490, in accordance with implementations of the disclosure. FIG. 6 includes device 400 that has a modified global actuator 640 coupled to a remote datum 690. In FIG. 6, global micro-actuator 640 traverses through a void 695 in source layer 490 and attaches to remote datum 690. This configuration may allow for a longer extension of global micro-actuator 640 and thus a larger adjustment range of the lens assemblies 420.

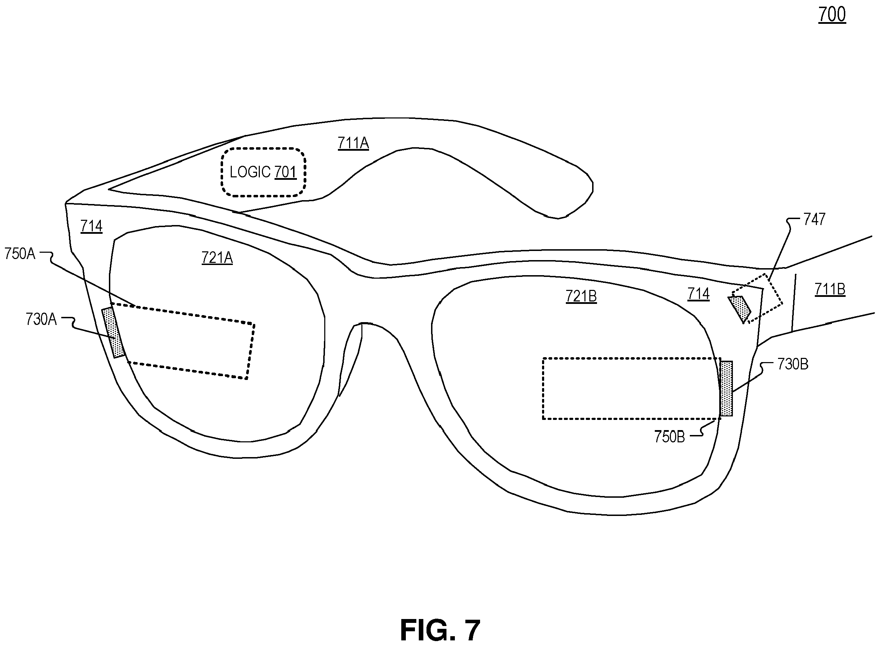

FIG. 7 illustrates an example AR headset 700 that includes a micro-displays 730A and 730B that may include micro-actuators configured to move lens assemblies, in accordance with implementations of the disclosure. Micro-displays 730A and 730B may be configured to present virtual images to an eyebox region in order to display the virtual images to a user. Of course, micro-displays 730A and 730B may be used in head-mounted devices that aren't necessarily considered AR headsets.

AR headset 700 includes arms 711A and 711B coupled to frame 714. Arms 711A and 711B are for securing headset 700 to a head of a user. AR headset 700 may include one or more cameras 747 that may include an image sensor. Headset 700 includes near-eye optical elements 721A and 721B secured by frame 714. In the illustrated implementation, near-eye optical elements 721A and 721B include waveguides 750A and 750B, respectively. Waveguide 750A may receive an image generated by micro-display 730A and present the image to a user as a virtual image. Similarly, waveguide 750B may receive an image generated by micro-display 730B and present the image to a user as a virtual image. In other implementations, micro-display presents a virtual image to the eyebox region without utilizing a waveguide in a near-eye optical element.

In the illustrated implementation, focusing logic 701 may be configured to drive a first actuator, a second actuator, and a third actuator of the micro-displays to focus their image over a temperature range. Focusing logic 701 may be configured to drive lens assemblies configured as the payloads of any of the structures 100, 200, 300, 400, 500, or 600. Focusing logic 701 may be configured to drive the first actuator, the second actuator, and the third actuator in response to a resistance of Shape-Memory Alloy (SMA) wires included in the first actuator, the second actuator, and the third actuator when SMA wires are included in the actuators. Focusing logic 701 may also be configured to drive a global actuator 340/440/640.

In an implementation, focusing logic 701 is configured to drive the first actuator, the second actuator, and the third actuator in response to optical feedback of the micro-displays 730A and/or 730B. In an implementation, the optical feedback includes an image sensor configured to receive image light of the image generated by a micro-display. Analyzing the image captured by the image sensor may be used to drive the focusing logic 701 to adjust the lens assemblies in the micro-display in order to adjust the lens assemblies to properly focus the light emitted by the various light sources.

As described above, implementations of the disclosure may be utilized in contexts outside of adjusting lens assemblies. For example, actuators may be used to adjust payloads that include optical elements. In some implementations, there may be two actuators and two payloads. In some implementations, there may be three actuators and three payloads. In some implementations, there may be four or more actuators and four or more payloads. In an implementation, the optical elements include light sources. In an implementation, the optical elements include lenses. In an implementation, the optical elements include image sensors. In an implementation, a first SMA wire included in a first actuator adjusts the first payload and the second payload, a second SMA wire included in a second actuator adjusts the second payload and the third payload, and a third SMA wire included in the third actuator adjusts the third payload and the first payload.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may also be associated with applications, products, accessories, services, or some combination thereof, that are used to, e.g., create content in an artificial reality and/or are otherwise used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

The term "processing logic" (e.g. focusing logic 701) in this disclosure may include one or more processors, microprocessors, multi-core processors, Application-specific integrated circuits (ASIC), and/or Field Programmable Gate Arrays (FPGAs) to execute operations disclosed herein. In some embodiments, memories (not illustrated) are integrated into the processing logic to store instructions to execute operations and/or store data. Processing logic may also include analog or digital circuitry to perform the operations in accordance with embodiments of the disclosure.

A "memory" or "memories" described in this disclosure may include one or more volatile or non-volatile memory architectures. The "memory" or "memories" may be removable and non-removable media implemented in any method or technology for storage of information such as computer-readable instructions, data structures, program modules, or other data. Example memory technologies may include RAM, ROM, EEPROM, flash memory, CD-ROM, digital versatile disks (DVD), high-definition multimedia/data storage disks, or other optical storage, magnetic cassettes, magnetic tape, magnetic disk storage or other magnetic storage devices, or any other non-transmission medium that can be used to store information for access by a computing device.

Networks may include any network or network system such as, but not limited to, the following: a peer-to-peer network; a Local Area Network (LAN); a Wide Area Network (WAN); a public network, such as the Internet; a private network; a cellular network; a wireless network; a wired network; a wireless and wired combination network; and a satellite network.

Communication channels may include or be routed through one or more wired or wireless communication utilizing IEEE 802.11 protocols, short-range wireless protocols, SPI (Serial Peripheral Interface), I²C (Inter-Integrated Circuit), USB (Universal Serial Port), CAN (Controller Area Network), cellular data protocols (e.g. 3G, 4G, LTE, 5G), optical communication networks, Internet Service Providers (ISPs), a peer-to-peer network, a Local Area Network (LAN), a Wide Area Network (WAN), a public network (e.g. "the Internet"), a private network, a satellite network, or otherwise.

A computing device may include a desktop computer, a laptop computer, a tablet, a phablet, a smartphone, a feature phone, a server computer, or otherwise. A server computer may be located remotely in a data center or be stored locally.

The processes explained above are described in terms of computer software and hardware. The techniques described may constitute machine-executable instructions embodied within a tangible or non-transitory machine (e.g., computer) readable storage medium, that when executed by a machine will cause the machine to perform the operations described. Additionally, the processes may be embodied within hardware, such as an application specific integrated circuit ("ASIC") or otherwise.

A tangible non-transitory machine-readable storage medium includes any mechanism that provides (i.e., stores) information in a form accessible by a machine (e.g., a computer, network device, personal digital assistant, manufacturing tool, any device with a set of one or more processors, etc.). For example, a machine-readable storage medium includes recordable/non-recordable media (e.g., read only memory (ROM), random access memory (RAM), magnetic disk storage media, optical storage media, flash memory devices, etc.).

The above description of illustrated embodiments of the invention, including what is described in the Abstract, is not intended to be exhaustive or to limit the invention to the precise forms disclosed. While specific embodiments of, and examples for, the invention are described herein for illustrative purposes, various modifications are possible within the scope of the invention, as those skilled in the relevant art will recognize.

These modifications can be made to the invention in light of the above detailed description. The terms used in the following claims should not be construed to limit the invention to the specific embodiments disclosed in the specification. Rather, the scope of the invention is to be determined entirely by the following claims, which are to be construed in accordance with established doctrines of claim interpretation.

## Claims

1. A display comprising:
a source layer including a red light source configured to emit red light, a green light source configured to emit green light, and a blue light source configured to emit blue light;
a first lens assembly configured to focus the red light of an image;
a second lens assembly configured to focus the green light of the image;
a third lens assembly configured to focus the blue light of the image;
a first actuator;
a second actuator; and
a third actuator, wherein the first actuator, the second actuator, and the third actuator are disposed between the first, second, and third lens assemblies.

2. The display of claim 1, wherein the first actuator, the second actuator, and the third actuator adjust at least two of the first lens assembly, the second lens assembly, or the third lens assembly.

3. The display of claim 2, wherein a first Shape-Memory Alloy (SMA) wire included in the first actuator rotates the first lens assembly clockwise and rotates the second lens assembly counterclockwise.

4. The display of any preceding claim, wherein an actuation direction of the first actuator, the second actuator, and the third actuator is parallel to an actuator movement of the first actuator, the second actuator, and the third actuator.

5. The display of any preceding claim, wherein an actuation direction of the first actuator, the second actuator, and the third actuator is non-parallel to an actuator movement of the first actuator, the second actuator, and the third actuator.

6. The display of any preceding claim, wherein the first actuator, the second actuator, and the third actuator include helical, linear, levered, or scissor linkage actuators.

7. The display of any preceding claim, further comprising:
a global actuator configured to adjust a focus distance of the first lens assembly, the second lens assembly, and the third lens assembly, wherein the first actuator, the second actuator, and the third actuator are coupled to adjust from the global actuator.

8. The display of any preceding claim, further comprising:
a first lock mechanism configured to retain a first position of the first lens assembly;
a second lock mechanism configured to retain a second position of the second lens assembly; and
a third lock mechanism configured to retain a third position of the third lens assembly, in which case optionally wherein activating the first lock mechanism prevents adjustment of the first lens assembly while the second lens assembly is being adjusted by the first actuator, and wherein activating the second lock mechanism prevents adjustment of the second lens assembly while the third lens assembly is being adjusted by the second actuator.

9. The display of any preceding claim, further comprising:
focusing logic configured to drive the first actuator, the second actuator, and the third actuator to focus the image over a temperature range.

10. The display of claim 9, and any one or more of:
a) wherein the focusing logic is configured to drive the first actuator, the second actuator, and the third actuator in response to a resistance of Shape-Memory Alloy (SMA) wires included in the first actuator, the second actuator, and the third actuator; or
b) wherein the focusing logic is configured to drive the first actuator, the second actuator, and the third actuator in response to optical feedback of the display.

11. The display of any preceding claim, and any one or more of:
a) wherein each actuator adjusts two or more lens assemblies; or
b), wherein the first actuator, the second actuator, and the third actuator are disposed within center gaps and edge gaps defined by the first lens assembly, the second lens assembly, and the third lens assembly.

12. A device comprising:
a first payload including a first optical element;
a second payload including a second optical element;
a first actuator; and
a second actuator, wherein the first actuator and the second actuator are configured to adjust the first payload or the second payload, and wherein at least one of the first actuator and or the second actuator is disposed within edge gaps of the first payload and the second payload.

13. The device of claim 12, wherein at least one of the first actuator and the second actuator is outside an outermost point of the first payload and the second payload.

14. The device of claim 12 or 13, and any one or more of:-
a) wherein the first optical element includes a first light source and the second optical element includes a second light source; or
b) wherein the first optical element includes a first image sensor and the second optical element includes a second image sensor; or
c) wherein the first optical element includes a first lens and the second optical element includes a second lens, and wherein a first Shape-Memory Alloy (SMA) wire included in the first actuator adjusts the first payload and the second payload.

15. A head-mounted display (HMD) comprising:
a frame; and
a micro-display for presenting a virtual image to an eyebox region, the micro-display comprising:
at first light source configured to emit first light of the virtual image;
a second light source configured to emit second light of the virtual image;
a first lens assembly configured to focus the first light of the virtual image;
a second lens assembly configured to focus the second light of the virtual image; and
an actuator configured to adjust both the first lens assembly and the second lens assembly.
